# EUROPEAN PATENT APPLICATION

(11) **EP 4 568 070 A1**
(43) Date of publication of application: **11.06.2025**
(21) Application number: 23850260.3
(22) Date of filing: 29.06.2023
(51) Int. Cl.: H02K 1/28, H02K 1/278, F04D 13/06

(54) **MOTOR AND PUMP COMPRISING SAME**

(30) Priority: 03.08.2022 KR 20220097008
(71) Applicant: LG INNOTEK CO., LTD., Seoul 07796 (KR)
(72) Inventor: KIM, Sang Tae, Seoul 07796 (KR)
(74) Representative: DREISS Patentanwälte PartG mbB
(86) International application number: PCT/KR2023/009177
(87) International publication number: WO 2024/029750

(57) **Abstract**

A motor comprises: a housing; a stator disposed inside the housing; and a rotor disposed inside the stator. The rotor comprises: a rotor core including a body portion, a flange portion extending radially from the bottom of the body portion, and a protrusion portion protruding from an upper surface of the flange portion; and a magnet disposed on the outer surface of the body portion, wherein the protrusion portion is disposed between the flange portion and the magnet.

## Description

### [Technical Field]

The present embodiment relates to a motor and a pump comprising same.

### [Background Art]

The pump includes a motor section that generates rotational driving force and a pump section that generates hydraulic pressure. Therefore, since the motor section and pump section inside the pump are separated from each other, there is a problem of increasing the number of parts and the overall size of the product.

In general, an EOP may include a housing, a stator being disposed inside the housing, and an outer gear and an inner gear being disposed inside the stator. Among these, the arrangement area of the outer gear is set by a can being disposed between the stator, and the arrangement area of the inner gear is set by a cover being coupled with the housing.

Since the EOP according to the prior art does not have a means to support the load applied to the outer gear, there is a problem that the rotational stability of the outer gear or inner gear is deteriorated due to the force being applied at the outlet of the pump as the operating pressure inside the pump increases. In particular, as the driving torque of the outer gear increases when high pressure occurs inside the pump, irregular friction occurs due to rotation, which becomes a factor that degrades the performance of the pump.

### [Detailed Description of the Invention]

### [Technical Subject]

The present embodiment is intended to provide a motor and a pump including the same that can secure rotational stability of a rotor, thereby minimizing torque loss due to friction, and enhancing the performance of the pump.

### [Technical Solution]

A motor according to the present embodiment comprises: a housing; a stator being disposed inside the housing; and a rotor being disposed inside the stator, wherein the rotor comprises: a rotor core including a body portion, a rotor core including a flange portion extending radially from a lower end of the body portion and a protrusion portion protruded from an upper surface of the flange portion; and a magnet being disposed on an outer surface of the body portion, and wherein the protrusion portion is disposed between the flange portion and the magnet.

With respect to the axial direction, the flange portion and the magnet can be spaced apart from each other.

With respect to the axial direction, the length of the flange portion may be within 15% to 40% of the length of the body portion.

The protrusion portion can come into contact with the magnet.

With respect to the radial direction, the rotor and the stator can be spaced apart by 0.08 mm to 0.16 mm.

The upper surface of the magnet can be exposed upwardly from the body portion.

It may include a guide portion being protruded from an outer surface of the body portion and facing a side surface of the magnet.

The guide portion may have a pentagonal cross-sectional shape.

The guide portion may include a first side surface being in contact with a side surface of the magnet, a second side surface being disposed on an outer side of the first side surface and spaced apart from a side surface of the magnet, and an outer surface being disposed on an outer side of the second side surface.

A pump according to the present embodiment comprises: a housing; a stator being disposed inside the housing; an outer gear being disposed inside the stator; and an inner gear being disposed inside the outer gear, wherein the outer gear comprises: a body portion; a core including a flange portion extended radially from a lower end of the body portion and a protrusion portion protruded from an upper surface of the flange portion; and a magnet being disposed on an outer surface of the body portion, and wherein the protrusion portion is disposed between the flange portion and the magnet.

### [Advantageous Effects]

Through the present embodiment, there is an advantage in that a section having the effect of a dynamic pressure bearing inside the rotor is formed through a flange portion, thereby ensuring rotational stability of the rotor.

In addition, due to the magnet floating structure through the protrusion portion, the magnetic force of the magnet can be easily guided to the stator, so there is an advantage of enhancing the performance of the motor and pump.

### [Brief Description of Drawings]

FIG. 1 is a perspective view illustrating the appearance of a pump according to an embodiment of the present invention.
FIG. 2 is an exploded perspective view of a pump according to an embodiment of the present invention.
FIG. 3 is an exploded perspective view of an outer gear, an inner gear, and a cover according to an embodiment of the present invention.
FIG. 4 is a cross-sectional view of a pump according to an embodiment of the present invention.
FIG. 5 is a perspective view of a rotor according to an embodiment of the present invention.
FIG. 6 is an exploded perspective view of a rotor according to an embodiment of the present invention.
FIG. 7 is a cross-sectional view of a rotor according to an embodiment of the present invention.

### [BEST MODE]

Hereinafter, preferred embodiments of the present invention will be described in detail with respect to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention. In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used.

These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction based on one component may be included.

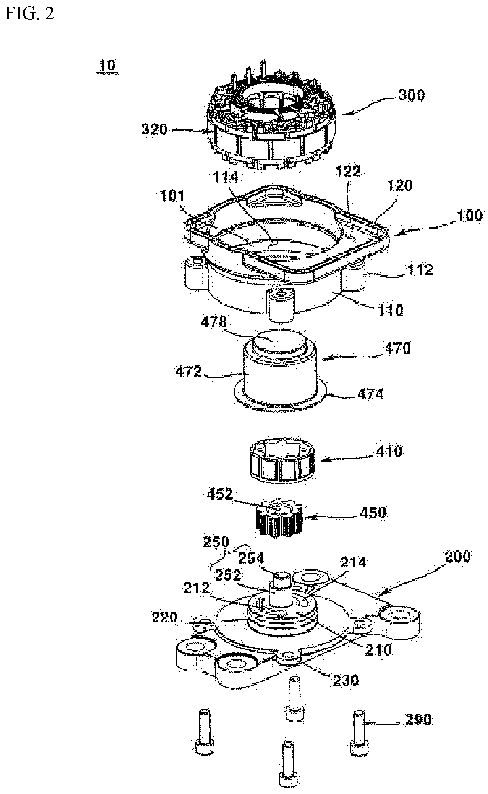

The 'axial direction' used hereinafter is defined as the direction forming the center of rotation of the rotor, the inner gear, and the outer gear. The 'axial direction' may be the direction in which the components disassembled with respect to FIG. 2 are coupled. The 'axial direction' may be defined as the up-down direction.

The 'radial direction' used hereinafter is defined as a direction perpendicular to the 'axial direction' described above. The 'radial direction' can be defined as the protrusion direction of the first lobe from the inner surface of the outer gear, and the protrusion direction of the second lobe from the inner surface of the inner gear.

The 'circumferential direction' used hereinafter may be defined as the circumferential direction of any one among the stator, the rotor, the external gear, and the internal gear, or the circumferential direction of an area forming an imaginary concentric circle with the circumferential direction of any one among the stator, the rotor, the external gear, and the internal gear.

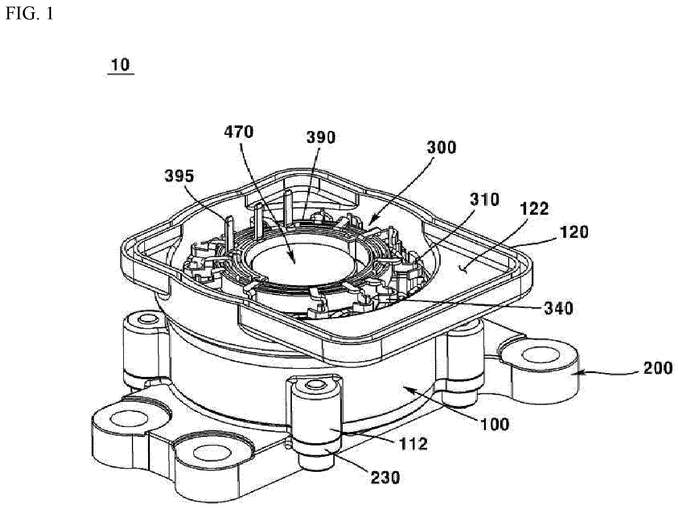

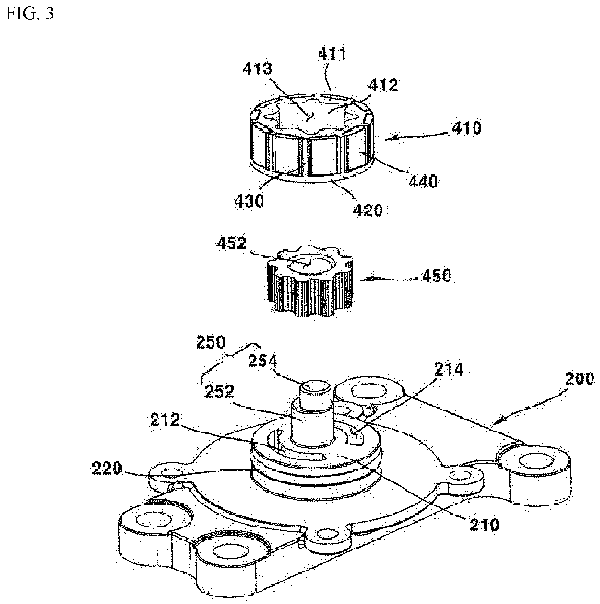

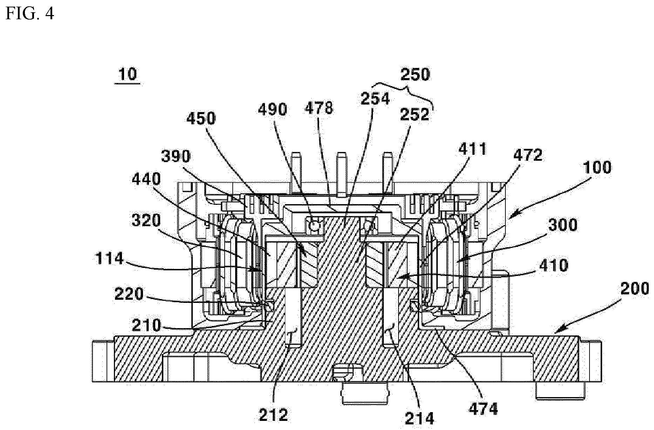

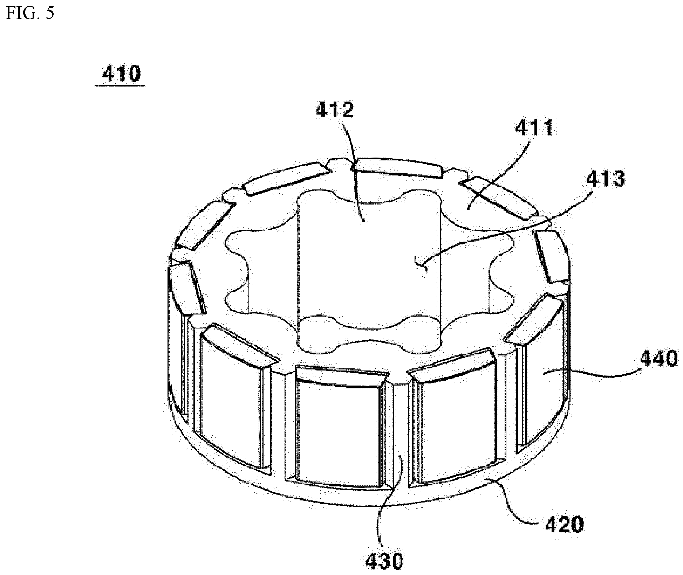

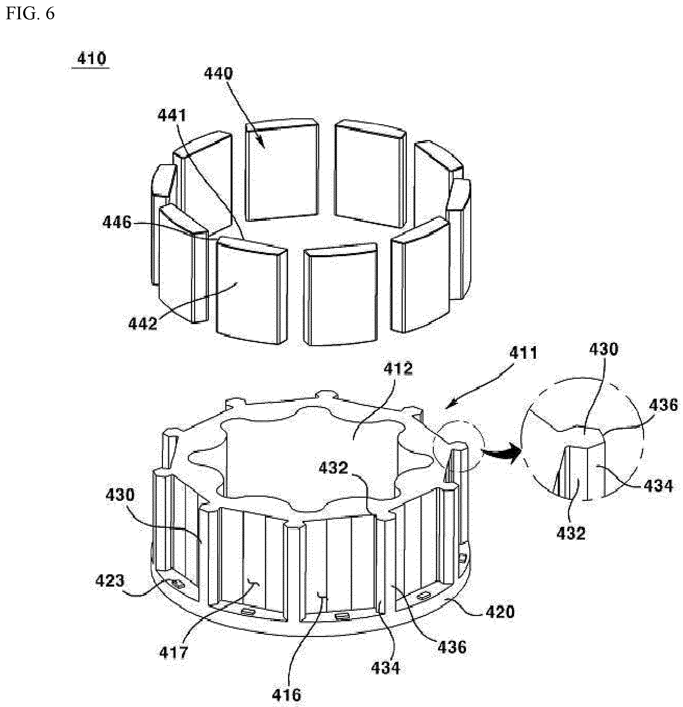

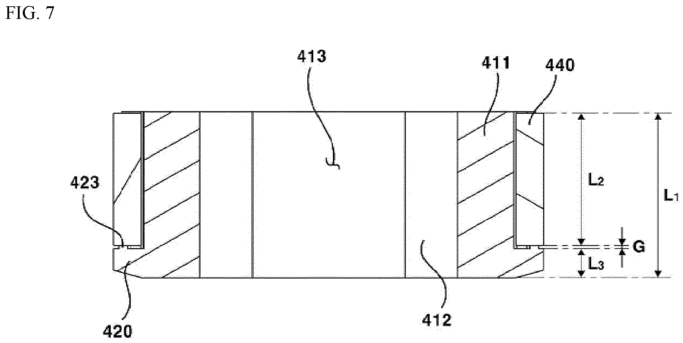

FIG. 1 is a perspective view illustrating the appearance of a pump according to an embodiment of the present invention; FIG. 2 is an exploded perspective view of a pump according to an embodiment of the present invention; FIG. 3 is an exploded perspective view of an outer gear, an inner gear, and a cover according to an embodiment of the present invention; FIG. 4 is a cross-sectional view of a pump according to an embodiment of the present invention; FIG. 5 is a perspective view of a rotor according to an embodiment of the present invention; FIG. 6 is an exploded perspective view of a rotor according to an embodiment of the present invention; and FIG. 7 is a cross-sectional view of a rotor according to an embodiment of the present invention.

Referring to FIGS. 1 to 7, an outer shape of the pump **10** according to an embodiment of the present invention may be formed by the coupling of a housing **100** and a cover **200.** The cover **200** may be coupled with a lower surface of the housing **100.** The housing **100** and the cover **200** may be screw-coupled through a screw **290.** Each of the housing **100** and the cover **200** may include a first coupling portion **112** and a second coupling portion **230** being coupled with the screw **290.** The first coupling portion **112** and the second coupling portion **230** may be disposed to face each other in an up and down direction, and may each include a hole being coupled with the screw **290.**

The cover **200** may include an opening. In detail, a first opening through which fluid is sucked in and a second opening through which circulated fluid is discharged may be formed on one surface of the cover **200.** A third opening **212** connected to the first opening and a fourth opening **214** connected to the second opening may be formed on the other surface of the cover **200.** The first opening and the second opening may be formed on a lower surface of the cover **200,** and the third opening **212** and the fourth opening **214** may be formed on an upper surface of the cover **200** being coupled with the housing **100.**

On an upper surface of the cover **200,** a mounting portion **210** being protruded upward and coupled to a space inside the can **470** to be described later may be disposed. Accordingly, the cover **200** may be understood to include a cover body and a mounting portion **210** being protruded from an upper surface of the cover body. The cross-section of the mounting portion **210** may be circular.

The mounting portion **210** may be coupled to a space inside the can **470.** The cross-sectional shape of the mounting portion **210** may correspond to the cross-sectional shape of the space inside the can **470.** A ring-shaped sealing member **220** for sealing may be disposed between an outer surface of the mounting portion **210** and an inner surface of the space inside the can **470.** The sealing member **220** may be formed of a rubber material to prevent fluid from leaking between the outer surface of the mounting portion **210** and the inner surface of the space inside the can **470.** A groove may be formed on an outer surface of the mounting portion **210** being recessed more than other areas and into which the sealing member **220** is coupled.

A third opening **212** through which fluid is sucked in and a fourth opening **214** through which the sucked fluid is discharged may be formed on an upper surface of the cover **200.** The fluid may be oil. Each of the third opening **212** and the fourth opening **214** may be formed to have an arc shape, and may be disposed so that the gap between them gradually narrows as it travels from one side to the other. More specifically, the side where the gap between the third opening **212** is wide may be disposed so that it faces the side where the gap between the fourth opening **214** is wide, and the side where the gap between the third opening **212** is narrow may be disposed so that it faces the side where the gap between the fourth opening **214** is narrow.

The third opening **212** and the fourth opening **214** can be formed on an upper surface of the mounting portion **210.**

The housing **100** may be formed of metal or plastic material, but is not limited thereto.

The above pump **10** may include a motor. The motor may include a housing **100,** a stator **300,** and a rotor **410.** The rotor **410** is a component inside the pump **10** and may also be referred to as an outer gear **410.**

The housing **100** may include an upper region **120** and a lower region **110.** The upper region **120** may have a rectangular cross-section. The lower region **110** is disposed at a lower portion of the upper region **120** and may be formed to have a circular cross-section.

A second space **122** may be formed inside the upper region **120.** The second space **122** may have a groove shape. A plurality of electronic components for driving may be disposed in the second space **122.** For example, a printed circuit board not shown and a terminal **395** may be disposed in the second space **122.** A plurality of elements may be mounted on the printed circuit board.

The housing **100** may include a first partition wall **101** (see FIG. 2) dividing the upper region **120** and the lower region **110.** A hole may be formed in the center of the first partition wall **101** to which a first protruded portion **478** of a can **470** to be described later is coupled.

A separate cover not shown may be coupled on an upper surface of the housing **100** to cover the second space **122.** In this case, the separate cover is referred to as a second cover, and the cover **200** may be referred to as a first cover **200.**

A stator **300** and a rotor **410** may be disposed in the housing **100.** The rotor **410** may be disposed on the cover **200.**

The stator **300** can be disposed inside the housing **100.**

When the material of the housing **100** is plastic, the stator **300** can be formed integrally with the housing **100** by double injection. The stator **300** and the housing **100** can be formed integrally by insert injection. The stator **300** can be molded inside the housing **100.** A stator accommodating space in which the stator **300** is disposed can be formed inside the housing **100.** The stator receiving space can be disposed outside the first space **114.** The outer surface of the stator **300** can be surrounded by the housing **100.**

The stator **300** may include a stator core **320** and a coil **310** being wound around the stator core **320.** The stator **300** may include an insulator not shown disposed to surround an outer surface of the core. The coil **310** may be wound around an outer surface of the insulator.

A router **390** may be disposed on an upper surface of the stator core **320,** and the coil **310** being protruded upward from the stator core **320** may be aligned by the router **390.**

A bus bar **340** may be disposed on an upper surface of the router **390,** and an end portion of the coil **310** being protruded upward from the stator core **320** may be fused to the bus bar **340.**

A terminal **395** may be disposed on an upper surface of the router **390,** and the terminal **395** may have a shape being protruded upward from the router **390.** The printed circuit board may be electrically connected to the terminal **395.**

The first space **114** may be formed in the center of the housing **100.** The first space **114** may be formed at an inner side of the lower region **110.** The first space **114** may have a groove shape in which a portion of a lower surface of the housing **100** is upwardly recessed. The arrangement area of the stator **300** and the first space **114** may be partitioned by a second partition wall (not shown). The inner surface of the second partition wall may form an inner surface of the first space **114.** In other words, the second partition wall may be disposed between the stator **300** and an outer gear **410** to be described later. The second partition wall may be formed to have a thickness of 0.2 mm to 1 mm.

The second space **122** and the first space **114** can be partitioned in an upper direction and a lower direction by the first partition wall **101.** The lower surface of the first partition wall **101** can form an upper surface of the first space **114.** The first space **114** and the second space **122** can be partitioned into different regions through the first partition wall **101.** Accordingly, the fluid inside the first space **114** can be prevented from flowing into the second space **122.**

The rotor **410** may be disposed inside the stator **300.** As described above, the rotor **410** may be referred to as an outer gear **410 as** a component of a motor or a component of a pump **10.** As a component of the pump **10,** the gear may include an outer gear **410** and an inner gear **450.** The outer gear **410** and the inner gear **450** may be disposed in the first space **114.**

The rotor **410** may be disposed inside the stator **300.** The second partition wall may be disposed between the rotor **410** and the stator **300.** The rotor **410** includes a magnet **440,** and when a current is applied to the coil **310** of the stator **300,** the rotor **410** may rotate by electromagnetic interaction between the stator **300** and the rotor **410.**

A first hole **413** may be formed in the center of the rotor **410** in which the inner gear **450** is disposed. A plurality of peaks **412** being protruded inwardly from an inner surface and a plurality of grooves being disposed between the plurality of peaks **412** may be formed on an inner surface of the first hole **413** (see FIG. 5). That is, a first gear may be formed in which a plurality of peaks and grooves are disposed alternately on an inner circumferential surface of the first hole **413.**

The inner gear **450** may be disposed inside the rotor **410.** The inner gear **450** may be disposed in the first hole **413.** The rotor **410** may be referred to as an outer rotor, and the inner gear **450** may be referred to as an inner rotor.

In an outer circumferential surface of the inner gear **450** may include a plurality of peaks **454** being protruded outwardly from the outer surface, and grooves being disposed between the pluralities of peaks **454.** A second gear may be formed on an outer surface of the inner gear **450** in which a plurality of peaks **454** and a plurality of grooves are disposed alternately.

In other words, the inner gear **450** may have a second lobe having N gear teeth radially outwardly disposed along a circumferential direction based on the center of rotation. The rotor **410** may have N+1 first lobes radially and inwardly disposed. The first lobe may be disposed to be caught by the second lobe. When the rotor **410** rotates, the inner gear **450** may be rotated by the first lobe and the second lobe. Depending on the rotation of the inner gear **450,** a fluid may be introduced into a space inside a can **470** to be described later, or a fluid inside the space inside the can **470** may be discharged to the outside.

The rotor **410** and the inner gear **450** can rotate eccentrically. Due to the eccentricity of the rotor **410** and the inner gear **450,** a volume capable of transporting fluid fuel is generated between the rotor **410** and the inner gear **450,** and the part where the volume increases sucks in the surrounding fluid due to a decrease in pressure, and the part where the volume decreases discharges the fluid due to an increase in pressure.

The inner gear **450** and the rotor **410** may be disposed so that their centers do not coincide with each other. The centers of rotation of the rotor **410** and the inner gear **450** may be different.

A hole **452** into which a shaft **250** to be described later is coupled can be formed in the center of the inner gear **450.**

The pump **10** may include a can **470.** The can **470** may be disposed in the first space **114.** The can **470** may be formed of a metal material. The can **470** may be formed integrally with the housing **100** by double injection. However, this is exemplary, and the can **470** may also be formed of a plastic material.

The above can **470** may include a body portion **472,** a lower end portion **474** being protruded outward from a lower end of the body portion **472,** and a first protruded portion **478** being protruded upward from an upper surface of the body portion **472.**

A space may be formed inside the body portion **472.** The inner gear **450** and the rotor **410** may be disposed in the space. The cross-sectional shape of the body portion **472** may be formed to correspond to the cross-sectional shape of the first space **114.** For example, the cross-sectional shape of the body portion **472** may be circular.

The lower end portion **474** may be formed to be extended outwardly by being bent from the lower end of the body portion **472.** The lower end portion **474** may be disposed between the lower surface of the housing **100** and the upper surface of the cover **200.**

The first protruded portion **478** can be coupled to a hole in the first partition wall **101.** The cross-sectional shape of the first protruded portion **478** can be formed to correspond to the cross-sectional shape of the hole. The upper end of the first protrusion **478** can be protruded upward from an upper surface of the first partition wall **101.**

A bearing space for accommodating a bearing **490** to be described later may be formed inside the first protruded portion **478.** The first protruded portion **478** may be formed to have a smaller cross-sectional area than the body portion **472.**

The fluid in the first space **114** can be prevented from flowing into the second space **122** by the can **470.**

The motor may include a bearing **436.** The bearing **490** may be disposed on the rotor **410.** The bearing **490** may be a ball bearing. Accordingly, the bearing **490** may include a ball being disposed between an outer ring and an inner ring. A hole may be formed in the center of the bearing **490.** A shaft **250** may be coupled to the hole. The shaft **250** may be press-fitted into the hole. The shaft **250** may be coupled to the inner ring. An outer surface of the shaft **250** may be in contact with an inner surface of the inner ring. Therefore, when the rotor **410** rotates, the bearing **490** may support the rotation of the rotor **410.** In some cases, the motor may include a support (not shown) being rotatably coupled with the rotor **410** and rotates the bearing **490** together with the rotation. In this case, the bearing **490** may be rotated against the shaft **250** by the rotation of the rotor **410.**

The pump **10** may include a shaft **250.** The shaft **250** may support the rotation of the inner gear **450** or the rotor **410.** The shaft **250** may have a shape being protruded upward from an upper surface of the cover **200.** The shaft **250** may have a shape being protruded upward from an upper surface of the mounting portion **210.** The shaft **250** may be formed as one body with the cover **200.**

The shaft **250** may include a first region **252** being coupled to the inner gear **450** and a second region **254** being coupled to the bearing **490.** The first region **252** may be coupled to a hole **452** of the inner gear **450,** and the second region **254** may be coupled to a hole of the bearing **490.**

Each of the first region **252** and the second region **254** may have a circular cross-section. The first region **252** and the second region **254** may have different centers. The center **O1** of the first region **252** may be different from the center **O2** of the second region **254.** The first region **252** and the second region **254** may be disposed eccentrically.

The center of the first region **252** may correspond to the center of rotation of the inner gear **450.** The center of the second region **254** may correspond to the center of rotation of the rotor **410.** Accordingly, the rotation of the bearing **490** and the rotor **410** may be supported with the second region **254** as the center, and the rotation of the inner gear **450** may be supported with the first region **252** as the center.

Hereinafter, the rotor **410** will be described.

The rotor **410** may be disposed inside the stator **300.** The rotor **410** may be spaced apart from the inner surface of the can **470** by 0.08 mm to 0.16 mm with respect to the radial direction. When the can **470** is omitted, the rotor **410** may be spaced apart from the stator **300** by 0.08 mm to 0.16 mm with respect to the radial direction.

As illustrated in FIGS. 5 to 7, the rotor **410** may include a rotor core including a body portion **411,** a flange portion **420,** a protrusion portion **423,** and a guide portion **436.** In addition, the rotor **410** may include a magnet **440** being disposed on an outer surface of the body portion **411.** The body portion **411,** the flange portion **420,** the guide portion **436,** and the protrusion portion **423** may be formed of a metal material and formed integrally. The body portion **411,** the flange portion **420,** the guide portion **436,** and the protrusion portion **423** may be formed as one body. Unlike this, the material of the body portion **411,** the flange portion **420,** and the protrusion portion **423** may be plastic.

The rotor core may be referred to as a core.

The body portion **411** can form the outer shape of the rotor **410.** The body portion **411** can be formed in a ring shape with the upper and lower surfaces open. A first hole **413** can be formed in the center of the body portion **411** being extended in an axial direction and coupled with the inner gear **450.** As described above, a plurality of ridge sections **412** and valley sections can be disposed along a circumferential direction alternately on an inner circumferential surface of the first hole **413.**

A first groove **416** to which the magnet **440** is coupled may be formed on an outer circumferential surface of the body portion **411.** The first groove **416** may have a shape being recessed inward from an outer surface of the body portion **411** compared to other regions. The first grooves **416** may be provided in plurality and may be disposed to be spaced apart from each other along the circumferential direction of the body portion **411.** The magnet **440** may be coupled to the first groove **416.**

A second groove **417** may be formed on a bottom surface of the first groove **416** so as to be recessed more inwardly than other regions. An adhesive may be applied to the second groove **417.** Through the adhesive being applied to the second groove **417,** the inner surface of the magnet **440** may be coupled to a bottom surface of the first groove **416.** Meanwhile, the adhesive may also be applied to a bottom surface of the first groove **416.**

A guide portion **430** may be disposed between the pluralities of first grooves **416.** The guide portion **430** may have a shape being protruded outward from an outer surface of the body portion **411.** The guide portion **430** may be disposed between two adjacent magnets **440.** When the magnet **440** is coupled to the body portion **411,** the inner surface **444** of the magnet **440** may be disposed to face the bottom surface of the first groove **416** in a radial direction, and the side surface of the magnet **440** may be disposed to face the side surface of the guide portion **430** in a circumferential direction.

The above guide portion **430** may have a polygonal cross-sectional shape. For example, the cross-sectional shape of the guide portion **430** may be a pentagon. The guide portion **430** may include the first side surface **432,** the second side surface **434,** and the outer surface **436.**

With respect to a single guide portion **430,** the first side surface **432** may be provided in plurality and disposed to face each other. The first side surface **432** may form an acute angle with the outer surface of the body portion **411.** The first side surface **432** may be in contact with the side surface **446** of the magnet **440.** The first side surface **432** may form the inner surface of the first groove **416.** With respect to the radial direction of the body portion **411,** the first side surface **432** may be an inclined surface having a shape in which the circumferential length of the first groove **416** becomes smaller as it goes outward. With respect to the radial direction of the body portion **411,** the first side surface **432** may be an inclined surface having a shape in which the circumferential length to the first side surface **432** of the adjacent guide portion **430** becomes smaller as it goes outward.

With respect to a single guide portion **430,** the second side surface **434** may be provided in multiple numbers and disposed to face each other. The second side surface **434** may be disposed on an outer side of the first side surface **432.** The second side surface **434** may be spaced apart from the side surface **446** of the magnet **440.** The second side surface **434** may form the inner surface of the first groove **416.** With respect to the radial direction of the body portion **411,** the second side surface **434** may be an inclined surface having a shape in which the circumferential length of the first groove **416** increases as it goes outward.

The outer surface **436** of the guide portion **430** may be disposed to connect the plurality of second side surfaces **434.** The outer surface **436** of the guide portion **430** may be a flat surface, but, unlike this, may be a curved surface having a predetermined curvature. When the outer surface **436** of the guide portion **430** is a curved surface, the curvature of the outer surface **436** may correspond to the curvature of the bottom surface of the first groove **416** or may correspond to the curvature of the flange portion **420** to be described later. The outer surface **436** may be disposed to form the same plane as the outer surface of the flange portion **420.** The radial length from the center of the body portion **411** to the outer surface **436** of the guide portion **430** may correspond to the radial length from the center of the body portion **411** to the outer surface **442** of the magnet **440.** The radial length from the center of the body portion **411** to the outer surface **436** of the guide portion **430** may correspond to the radial length from the center of the body portion **411** to the outer surface of the flange portion **420.**

The magnet **440** may be disposed in the first groove **416** being disposed between the pluralities of guide portions **430.** The magnets **440** may be provided in plurality and may be disposed spaced apart from each other along a circumferential direction of the body portion **411.** The magnet **440** may include an outer surface **442,** an inner surface **444,** and a side surface **446** connecting the outer surface **442** and the inner surface **444.**

The side surface **446** of the magnet **440** may be disposed to face the first side surface **432** of the guide portion **430.** The side surface **446** of the magnet **440** may be in contact with the first side surface **432** of the guide portion **430.** The side surface **446** of the magnet 440 and the first side surface **432** of the guide portion **430** may be inclined surfaces with shapes corresponding to each other.

The outer surface **442** of the magnet **440** can be spaced apart from the outer surface **436** of the guide portion **430** in a circumferential direction. The inner surface **446** of the magnet **440** can be coupled to a bottom surface of the first groove **416,** that is, an outer circumferential surface of the body portion **411.**

The rotor **410** may include a flange portion **420.** The flange portion **420** may have a shape being protruded radially from one end of the body portion **411.** By the flange portion **420,** the rotor **410** may include a plurality of regions having different radial lengths with respect to the center. The upper surface of the flange portion **420** may be disposed to face the lower surface of the magnet **440.** An upper surface of the flange portion **420** may be spaced apart from a lower surface of the magnet **440.** A gap **G** may be formed between the upper surface of the flange portion **420** and the lower surface of the magnet **440.**

As in FIG. 7, the axial length **L1** of the body portion **411** may be equal to the sum of the axial length **L2** of the magnet **440,** the axial length **L3** of the flange portion **420,** and the axial length of the gap **G.**

The radial length from the center of the body portion **411** to the outer surface **436** of the guide portion **430** may correspond to the radial length from the center of the body portion **411** to an outer surface of the flange portion **420.** The radial length from the center of the body portion **411** to the outer surface **442** of the magnet **440** may correspond to the radial length from the center of the body portion **411** to an outer surface of the flange portion **420.** With respect to the axial direction, the length of the flange portion **420** may be shorter than the length of the guide portion **430.** With respect to the axial direction, the length of the flange portion **420** may be within 15% to 40% of the length of the rotor **410** or the body portion **411.**

The first groove **416** may have an inner surface defined by the side surface of the guide portion **430** and the upper surface of the flange portion **420.** The magnet **440** may have both side surfaces **446** and a lower surface covered by the side surface of the guide portion **430** and the upper surface of the flange portion **420,** respectively, and the upper surface may be opened upward.

The rotor **410** may include a protrusion portion **423.** The protrusion portion **423** may be formed to be protruded from one surface of the flange portion **420** that faces the magnet **440** in an axial direction. The protrusion portion **423** may be disposed to overlap the magnet **440** in an axial direction. The protrusion portion **423** may be formed to be protruded upward from an upper surface of the flange portion **420.** Through the protrusion portion **423,** a lower surface of the magnet **440** may be spaced apart from an upper surface of the flange portion **420** in an axial direction. An upper surface of the protrusion portion **423** may be in contact with a lower surface of the magnet **440.** With respect to a single first groove **416,** the protrusion portion **423** can be disposed at the center of the circumference of the flange portion **420.** With respect to a single first groove **416,** the protrusion portion **423** can be disposed one by one, but unlike this, it can be provided in multiple forms and disposed spaced apart from one another.

With respect to an axial direction, the length of the protrusion portion **423** can be formed to be smaller than the length of the flange portion **420.**

The area of the area where the protrusion portion **423** and the magnet **440** come into contact may be smaller than the area of the upper surface of the flange portion **420** facing the magnet **440.**

According to the above structure, there is an advantage in that a section having the effect of a dynamic pressure bearing inside a rotor is formed through the flange portion, thereby ensuring rotational stability of the rotor.

In addition, because of the magnet floating structure through the protrusion portion, the magnetic force of the magnet can be easily guided to the stator, so there is an advantage of enhancing the performance of the motor and pump.

Meanwhile, in the present embodiment, the flange portion **420** is disposed at a lower end of the body portion **411** facing the cover **200,** but this is not limited thereto, and the flange portion **420** may be disposed at an upper end of the body portion **411** facing the bearing **490.** In this case, the protrusion portion **423** may be formed to be protruded downward from the lower surface of the flange portion **420** facing the magnet **440.**

In the above description, it is described that all the components constituting the embodiments of the present invention are combined or operated in one, but the present invention is not necessarily limited to these embodiments. In other words, inside the scope of the present invention, all of the components may be selectively operated in combination with one or more. In addition, the terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined. Terms used generally, such as terms defined in a dictionary, should be interpreted to coincide with the contextual meaning of the related art, and shall not be interpreted in an ideal or excessively formal sense unless explicitly defined in the present invention.

The above description is merely illustrative of the technical idea of the present invention, and those skilled in the art to which the present invention pertains may make various modifications and changes without departing from the essential characteristics of the present invention. Therefore, the embodiments disclosed in the present invention are not intended to limit the technical idea of the present invention but to describe the present invention, and the scope of the technical idea of the present invention is not limited by these embodiments. The protection scope of the present invention should be interpreted by the following claims, and all technical ideas inside the equivalent scope should be interpreted as being included in the scope of the present invention.

## Claims

1. A motor comprising:
a housing;
a stator disposed inside the housing; and
a rotor disposed inside the stator,
wherein the rotor comprises:
a rotor core including a body portion, a rotor core including a flange portion extending radially from a lower end of the body portion and a protrusion portion protruded from an upper surface of the flange portion; and
a magnet disposed on an outer surface of the body portion, and wherein the protrusion portion is disposed between the flange portion and the magnet.

2. The motor according to claim 1,
wherein with respect to an axial direction, the flange portion and the magnet are spaced apart from each other.

3. The motor according to claim 1,
wherein with respect to an axial direction, a length of the flange portion is within 15% to 40% of a length of the body portion.

4. The motor according to claim 1,
wherein the protrusion portion is come into contact with the magnet.

5. The motor according to claim 1,
wherein with respect to the radial direction, the rotor and the stator are spaced apart by 0.08 mm to 0.16 mm.

6. The motor according to claim 1,
wherein an upper surface of the magnet is exposed upwardly from the body portion.

7. The motor according to claim 1, including
a guide portion protruded from an outer surface of the body portion and facing a side surface of the magnet.

8. The motor according to claim 7,
wherein the guide portion has a pentagonal cross-sectional shape.

9. The motor according to claim 7,
wherein the guide portion includes a first side surface in contact with a side surface of the magnet, a second side surface disposed on an outer side of the first side surface and spaced apart from a side surface of the magnet, and an outer surface disposed on an outer side of the second side surface.

10. A pump comprising:
a housing;
a stator being inside the housing;
an outer gear disposed inside the stator; and
an inner gear disposed inside the outer gear,
wherein the outer gear comprises:
a body portion; a core including a flange portion extended radially from a lower end of the body portion and a protrusion portion protruded from an upper surface of the flange portion; and a magnet being disposed on an outer surface of the body portion, and
wherein the protrusion portion is disposed between the flange portion and the magnet.
